# EUROPEAN PATENT APPLICATION

(11) **EP 4 310 939 A1**
(43) Date of publication of application: **24.01.2024**
(21) Application number: 22807559.4
(22) Date of filing: 13.05.2022
(51) Int. Cl.: H01M 4/136, H01M 4/58, H01M 4/587, H01G 11/06, H01G 11/30, H01G 11/32, H01G 11/52, H01M 10/052, H01M 50/417, H01M 50/443, H01M 50/489

(54) **ELECTRIC POWER STORAGE ELEMENT**

(30) Priority: 14.05.2021 JP 2021082784
(71) Applicant: GS Yuasa International Ltd., Kisshoin, Minami-ku, Kyoto-shi, Kyoto 601-8520 (JP)
(72) Inventor: ITAKURA Daichi, Kyoto-shi, Kyoto 601-8520 (JP); SOGO Yasuhiro, Kyoto-shi, Kyoto 601-8520 (JP); IGUCHI Takaaki, Kyoto-shi, Kyoto 601-8520 (JP)
(74) Representative: Isarpatent
(86) International application number: PCT/JP2022/020221
(87) International publication number: WO 2022/239861

(57) **Abstract**

An energy storage device according to one aspect of the present invention includes: a positive electrode containing a positive active material and a conductive agent; a negative electrode containing a negative active material; and a separator interposed between the negative electrode and the positive electrode, in which a content of the conductive agent in the positive electrode is 6% by mass or less, the positive active material contains a polyanionic compound, the negative active material contains a carbon material, the separator includes a substrate layer including a porous polyolefin-based resin film, the substrate layer contains inorganic particles, and the separator has an air permeability per unit thickness of 4.0 seconds/(100 cm³ ·µm) or less.

## Description

### TECHNICAL FIELD

The present invention relates to an energy storage device.

### BACKGROUND ART

Nonaqueous electrolyte secondary batteries typified by lithium ion nonaqueous electrolyte secondary batteries are widely used in electronic devices such as personal computers and communication terminals, motor vehicles, and the like because the batteries are high in energy density. The nonaqueous electrolyte secondary battery is generally provided with an electrode assembly with a pair of electrodes electrically isolated by a separator, and a nonaqueous electrolyte interposed between the electrodes and is configured to be charged and discharged by transferring ions between both the electrodes. In addition, capacitors such as lithium ion capacitors and electric double-layer capacitors are also widely in use as energy storage devices except for the nonaqueous electrolyte secondary batteries.

For purposes such as increasing a capacity of such an energy storage device and improving the energy density of the energy storage device, a carbon material such as graphite has been used as the negative active material of the energy storage device (cf. Patent Document 1). As a separator of this type of energy storage device, a polyolefin-based porous film in which a large number of pores are formed has been used in order to ensure ion permeability between positive and negative electrodes (cf. Patent Document 2).

### PRIOR ART DOCUMENT

### PATENT DOCUMENTS

Patent Document 1: JP-A-2005-222933
Patent Document 2: WO 2012/049748 A

### SUMMARY OF THE INVENTION

### PROBLEMS TO BE SOLVED BY THE INVENTION

However, an energy storage device using a conventional carbon material as a negative active material has a problem that output performance is not sufficient. In recent years, the energy storage device has been used as a power source for assisting an engine of a hybrid vehicle or a plug-in hybrid vehicle. An energy storage device used in this type of automobile field is required to have excellent output characteristics. In addition, the energy storage device is required to have high resistance to internal short-circuit.

An object of the present invention is to provide an energy storage device in which a carbon material is used as a negative active material, the energy storage device having excellent output performance and high resistance to internal short-circuit.

### MEANS FOR SOLVING THE PROBLEMS

An energy storage device according to one aspect of the present invention includes: a positive electrode containing a positive active material and a conductive agent; a negative electrode containing a negative active material; and a separator interposed between the negative electrode and the positive electrode, in which a content of the conductive agent in the positive electrode is 6% by mass or less, the positive active material contains a polyanionic compound, the negative active material contains a carbon material, the separator includes a substrate layer including a porous polyolefin-based resin film, the substrate layer contains inorganic particles, and the separator has an air permeability per unit thickness of 4.0 seconds/(100 cm³ µm) or less.

### ADVANTAGES OF THE INVENTION

The energy storage device according to one aspect of the present invention has excellent output performance and high resistance to internal short-circuit.

### BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of energy storage devices.

### MODE FOR CARRYING OUT THE INVENTION

An embodiment of the present invention provides the following aspects.

### Clause 1.

An energy storage device including: a positive electrode containing a positive active material and a conductive agent; a negative electrode containing a negative active material; and a separator interposed between the negative electrode and the positive electrode, in which a content of the conductive agent in the positive electrode is 6% by mass or less, the positive active material contains a polyanionic compound, the negative active material contains a carbon material, the separator includes a substrate layer including a porous polyolefin-based resin film, the substrate layer contains inorganic particles, and the separator has an air permeability per unit thickness of 4.0 seconds/(100 cm³ µm) or less.

### Clause 2.

The energy storage device according to Clause 1, wherein the separator has an average thickness of 18 pm or less.

### Clause 3.

The energy storage device according to Clause 1 or 2, wherein the separator has a porosity of 58% or less.

### Clause 4.

The energy storage device according to any one of Clauses 1 to 3, wherein the polyanionic compound has an average particle size of 5 pm or less.

An energy storage device according to one aspect of the present invention includes: a positive electrode containing a positive active material and a conductive agent; a negative electrode containing a negative active material; and a separator interposed between the negative electrode and the positive electrode, in which a content of the conductive agent in the positive electrode is 6% by mass or less, the positive active material contains a polyanionic compound, the negative active material contains a carbon material, the separator includes a substrate layer including a porous polyolefin-based resin film, the substrate layer contains inorganic particles, and the separator has an air permeability per unit thickness of 4.0 seconds/(100 cm³ µm) or less.

The present inventors have found that in an energy storage device using a carbon material as a negative active material, when a separator in which a substrate layer contains inorganic particles and an air permeability per unit thickness is 4.0 seconds/(100 cm³ µm) or less and a polyanionic compound as a positive active material are used in combination, and the content of a conductive agent in the positive electrode is 6% by mass or less, output performance and resistance to internal short-circuit of the energy storage device can be improved (for example, temperature rise can be suppressed). The reason for this is unknown but is considered as follows.

In the polyanionic compound, an oxygen desorption reaction from a crystal grid does not easily proceed, and therefore, a temperature rise at the time of occurrence of internal short-circuit in the energy storage device is suppressed. By setting the content of the conductive agent in the positive electrode to 6% by mass or less, a short-circuit current at the time of occurrence of internal short-circuit in the energy storage device can be suppressed from becoming excessively large, and therefore, an effect of suppressing temperature rise at the time of occurrence of internal short-circuit in the energy storage device can be enhanced. On the other hand, when the air permeability per unit thickness of the separator is 4.0 seconds/(100 cm³ µm) or less, diffusibility of charge carriers (lithium ions in the case of a lithium ion secondary battery) from the positive electrode containing the polyanionic compound can be improved. Since the substrate layer of the separator contains the inorganic particles, even if the separator is strongly pressed due to expansion and contraction of the negative electrode containing the carbon material, the air permeability of the separator can be sufficiently lowered while maintaining the shape of the separator. In addition, heat resistance of the separator is enhanced, and the effect of suppressing the temperature rise at the time of occurrence of internal short-circuit of the energy storage device can be enhanced. Therefore, it is presumed that the energy storage device has excellent output performance and high resistance to internal short-circuit.

Here, the "air permeability", which is also referred to as a Gurley value, indicates the number of seconds for which a certain volume of air passes through a certain area of paper under a certain pressure difference, and has a value measured in accordance with JIS-P-8117 (2009).

The separator preferably has an average thickness of 18 pm or less. When the average thickness of the separator is 18 pm or less, the output performance can be further improved. It is to be noted that the average thickness of the separator is regarded as an average value of thicknesses measured at any ten points.

The separator preferably has a porosity of 58% or less. When the porosity of the separator is 58% or less, resistance to internal short-circuit can be further improved while good output characteristics are maintained. The porosity is a ratio of a void volume to the total volume of the separator, and is measured in accordance with "Pore Volume Rate" specified in JIS-L-1096 (2010).

The polyanionic compound preferably has an average particle size of 5 pm or less. When the average particle size of the polyanionic compound is 5 pm or less, the output performance can be further improved.

The configuration of an energy storage device, the configuration of an energy storage apparatus, and a method for manufacturing the energy storage device according to an embodiment of the present invention, and other embodiments will be described in detail. The names of the constituent members (constituent elements) used in the embodiments may be different from the names of the constituent members (constituent elements) used in the background art.

### <Configuration of energy storage device>

An energy storage device according to an embodiment of the present invention includes: an electrode assembly including a positive electrode, a negative electrode, and a separator; a nonaqueous electrolyte; and a case that houses the electrode assembly and the nonaqueous electrolyte. The electrode assembly is typically a stacked type obtained by stacking a plurality of positive electrodes and a plurality of negative electrodes with a separator interposed therebetween, or a wound type obtained by winding a positive electrode and a negative electrode stacked with a separator interposed therebetween. The nonaqueous electrolyte is present in a state of being contained in the positive electrode, the negative electrode, and the separator. A nonaqueous electrolyte secondary battery (hereinafter, also simply referred to as a "secondary battery") will be described as an example of the energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁷ Ω cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, and particularly preferably 10 pm or more and 25 pm or less. By setting the average thickness of the positive substrate to the above range, it is possible to increase the energy density per volume of a secondary battery while increasing the strength of the positive substrate.

The intermediate layer is a layer arranged between the positive substrate and the positive active material layer. The intermediate layer includes a conductive agent such as carbon particles to reduce contact resistance between the positive substrate and the positive active material layer. The configuration of the intermediate layer is not particularly limited, and includes, for example, a binder and a conductive agent.

The positive active material layer includes a positive active material and a conductive agent. The positive active material layer contains optional components such as a binder, a thickener, and a filler, if necessary.

The positive active material contains a polyanionic compound capable of storing and releasing ions such as lithium ions. Examples of the polyanionic compound include compounds containing an oxoacid anion (PO₄³⁻, SO₄²⁻, SiO₄⁴⁻, BO₃³⁻, VO₄³⁻, etc.). The oxoacid anion may be a condensed anion (P₂O₇⁴⁻, P₃O₁₀⁵⁻, etc.). The polyanionic compound preferably contains an alkali metal element or an alkaline earth metal element and a transition metal element. The polyanionic compound may further contain other elements (for example, halogen elements). As the alkali metal element or alkaline earth metal element of the polyanionic compound, among these, the alkali metal element is preferable, a lithium element, a sodium element, and a potassium element are more preferable, and a lithium element is still more preferable. As the transition metal element of the polyanionic compound, an iron element, a manganese element, a nickel element, and a cobalt element are preferable, and an iron element is more preferable. As the oxoacid anion of the polyanionic compound, phosphate anion (PO₄³⁻) and silicate anion (SiO₄⁴⁻) are preferable, and phosphate anion (PO₄³⁻) is more preferable.

As a preferable composition of the polyanionic compound disclosed herein, a compound represented by the following Formula 1 is exemplified.

LiₐM_{b}(AO_{c})_{d}Xₑ ... 1

In Formula 1, M represents at least one transition metal element. A is at least one selected from B, Al, Si, P, S, Cl, Ti, V, Cr, Mo, and W. X is at least one halogen element, a, b, c, d, and e are numbers that satisfy 0 < a ≤ 3, 0 < b ≤ 2, 2 ≤ c ≤ 4, 1 ≤ d ≤ 3, and 0 ≤ e ≤ 1. Each of a, b, c, d, and e may be an integer or a decimal.

As M in Formula 1, any one of Fe, Mn, Ni, and Co, or a combination of any two or more of these is preferable, and one having a high content of such an element (for example, in M, Fe or Mn is contained in an amount of 50 mol% or more) is preferable. Among them, Fe or Mn or a combination of two kinds of Fe and Mn is preferable, and particularly, it is preferable that M is only Fe or the content of Fe is high. As A, P or Si is preferable, and particularly P is preferable. X is preferably F. As an embodiment, a = 1, b = 1, c = 4, d = 1, and e = 0 may be preferable. The technique disclosed herein can be preferably carried out in an aspect in which the polyanionic compound contains at least one of Fe, Mn, Ni, and Co.

The above formula representing the polyanionic compound represents the composition in a state before a first charge treatment (that is, charge treatment is performed for the first time after the energy storage device is assembled by the constituent elements such as the positive electrode, the negative electrode, and the electrolyte) is performed.

Specific examples of the polyanionic compound include LiFePO₄, LiCoPO₄, LiFe_{0.5}Co_{0.5}PO₄, LiMnPO₄, LiNiPO₄, LiMn_{0.5}Fe_{0.5}PO₄, LiCrPO₄, LiFeVO₄, Li₂FeSiO₄, Li₂Fe₂(SO₄)₃, LiFeBO₃, LiFePO_{3.9}F_{0.2}, Li₃V₂(PO₄)₃, Li₂MnSiO₄, and Li₂CoPO₄F. Some of atoms or polyanions in these polyanionic compounds may be substituted with other atoms or other polyanions. A surface of the polyanionic compound may be coated with another material (carbonaceous materials such as graphite and non-graphitic carbon). One of the polyanionic compound may be used singly, or two or more thereof may be used in mixture.

The polyanionic compound is usually a particle (powder). The average particle size of the polyanionic compound is not particularly limited, and may be, for example, 0.1 pm or more and 20 pm or less. The average particle size of the polyanionic compound is preferably 1 pm or more and 15 pm or less, more preferably 1.5 pm or more and 10 pm or less, and still more preferably 2 pm or more and 5 pm or less. By setting the average particle size of the polyanionic compound to be equal to or more than the above lower limit, the polyanionic compound is easily produced or handled. By setting the average particle size of the polyanionic compound to be equal to or less than the above upper limit, the electron conductivity of the positive active material layer is improved, and the output performance of the energy storage device is further improved. From the viewpoint of enhancing the output performance of the energy storage device and the like, the average particle size of the polyanionic compound is preferably about 5 pm or less (for example, 4 pm or less, typically 3.5 pm or less). The average particle size of the polyanionic compound may be equal to or more than any of the above lower limits and equal to or less than any of the above upper limits. When a composite of a polyanionic compound and another material (carbonaceous materials such as graphite and non-graphitic carbon) is used, the average particle size of the composite is taken as the average particle size of the positive active material. The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher or a classifier is used to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As a classification method, a sieve or a wind force classifier or the like is used based on the necessity both in dry manner and in wet manner.

The specific surface area of the polyanionic compound is not particularly limited, and may be 5 m²/g or more. The specific surface area of the polyanionic compound is preferably 8 m²/g or more, more preferably 10 m²/g or more, still more preferably 12 m²/g or more (for example, 14.0 m²/g or more, for example, 15.0 m²/g or more). By setting the specific surface area of the polyanionic compound to be equal to or more than the above lower limit, the input performance of the secondary battery is further enhanced. The specific surface area of the polyanionic compound may be 30 m²/g or less or 20 m²/g or less. The specific surface area of the polyanionic compound may be equal to or more than any of the above lower limits and equal to or less than any of the above upper limits. The "specific surface area" of the polyanionic compound is a value measured in accordance with JIS-Z-8830 (2013).

The content of the polyanionic compound in the positive active material layer is preferably 50% by mass or more and 99% by mass or less, more preferably 70% by mass or more and 98% by mass or less, and still more preferably 80% by mass or more and 95% by mass or less. When the content of the polyanionic compound is in the above range, it is possible to achieve both high energy density and productivity of the positive active material layer.

The positive active material layer may further contain a positive active material (hereinafter, non-polyanionic positive active material) other than the polyanionic compound. Such a non-polyanionic positive active material can be appropriately selected from known positive active materials, which are usually used for lithium ion secondary batteries and the like. Examples of the non-polyanionic positive active material include lithium-transition metal composite oxides (lithium nickel cobalt manganese composite oxides) that have an α-NaFeO₂-type crystal structure, lithium-transition metal composite oxides that have a spinel-type crystal structure, chalcogenides, and sulfur. Examples of the lithium-transition metal composite oxides that have an α-NaFeO₂-type crystal structure include Li[LiₓNi₍₁₋ₓ₎]O₂ (0 ≤ x < 0.5), Li[LiₓNi_{y}Co_{(1-x-y)}]O₂ (0 ≤ x < 0.5, 0 < y ≤ 1), Li[LiₓCo₍₁₋ₓ₎]O₂ (0 ≤ x < 0.5), Li[LiₓNi_{y}Mn_{(1-x-y)}]O₂ (0 ≤ x < 0.5, 0 < γ < 1), Li[LiₓNi_{γ}Mn_{β}Co_{(1-x-γ-β)}]O₂ (0 ≤ x < 0.5, 0 < γ, 0 < β, 0.5 < γ + β < 1), and Li[LiₓNi_{γ}Co_{β}Al_{(1-x-γ-β)}]O₂ (0 ≤ x < 0.5, 0 < γ, 0 < β, 0.5 < γ + β < 1). Examples of the lithium-transition metal composite oxides that have a spinel-type crystal structure include LiₓMn₂O₄ and LiₓNi_{γ}Mn_{(2-γ)}O₄. Examples of the chalcogenides include a titanium disulfide, a molybdenum disulfide, and a molybdenum dioxide. Some of the atoms in these materials may be substituted with atoms composed of other elements.

The lower limit of the content of the polyanionic compound in the entire positive active material contained in the positive active material layer is 50% by mass. The lower limit of the content of the polyanionic compound is preferably 60% by mass, more preferably 80% by mass, still more preferably 90% by mass, and particularly preferably 99% by mass. The content of the polyanionic compound with respect to the total mass of the positive active material may be, for example, 100% by mass. As described above, by substantially using only the polyanionic compound as the positive active material, the above-described performance improvement effect (for example, improvement effect of resistance to internal short-circuit) can be further enhanced.

The conductive agent is not particularly limited as long as it is a conductive material. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material obtained by compositing carbon black with CNT may be used. Among them, carbon black is preferable, an in particular, acetylene black is preferable, from the viewpoint of electron conductivity and coatability.

The content of the conductive agent in the positive active material layer is preferably 1% by mass or more, and more preferably 3% by mass or more. By setting the content of the conductive agent to be equal to or more than the above lower limit, the energy density of the secondary battery can be enhanced. The content of the conductive agent is 6% by mass or less (for example, 1% by mass or more and 6% by mass or less), and preferably 5% by mass or less (for example, 2% by mass or more and 5% by mass or less) from the viewpoint of enhancing resistance to internal short-circuit. The content of the conductive agent may be equal to or more than any of the above lower limits and equal to or less than any of the above upper limits. The content of the conductive agent does not include a carbonaceous material or the like that coats the surface of the polyanionic compound.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as ethylene-propylene-diene rubber (EPDM), sulfonated EPDM, styrenebutadiene rubber (SBR), and fluororubber; and polysaccharide polymers.

The content of the binder in the positive active material layer is preferably 1% by mass or more and 10% by mass or less, more preferably 3% by mass or more and 9% by mass or less. By setting the content of the binder in the above range, the active material can be stably held.

Examples of the thickener include polysaccharide polymers such as carboxymethylcellulose (CMC), and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include rolled copper foils and electrolytic copper foils.

The average thickness of the negative substrate is preferably 2 pm or more and 35 pm or less, more preferably 3 pm or more and 30 pm or less, still more preferably 4 pm or more and 25 pm or less, and particularly preferably 5 pm or more and 20 pm or less. When the average thickness of the negative substrate is within the above range, it is possible to enhance the energy density per volume of a secondary battery while increasing the strength of the negative substrate.

The negative active material layer contains a negative active material.

As the negative active material, a carbon material capable of storing and releasing ions such as lithium ions is included. By containing the carbon material as the negative active material, a volume energy density of the energy storage device can be increased, and the output performance can be improved.

Examples of the carbon material include graphite and non-graphitic carbon. Examples of the non-graphitic carbon include hardly graphitizable carbon (hard carbon), easily graphitizable carbon (soft carbon), and amorphous carbon (amorphous carbon). Among these materials, graphite, hardly graphitizable carbon, and easily graphitizable carbon are preferable. Among them, graphite is preferable. In the negative electrode containing graphite, expansion and contraction associated with charge and discharge are large, and therefore, the separator tends to be strongly compressed due to the expansion and contraction; however, according to the present aspect, it is possible to suppress inconvenience due to such compression. The carbon material may be composite particles where the carbon material is combined with particles of another material (e.g. another carbon material or Si compound), or may be non-composite particles where the carbon material is not combined with other particles. For example, particles of the carbon material may be particles, the surface of which is coated (for example, with amorphous carbon coating). In the negative active material layer, one of these materials may be used singly, or two or more of these materials may be used in mixture.

The term "graphite" refers to a carbon material in which an average lattice spacing (d₀₀₂) of the (002) plane determined by an X-ray diffraction method before charge-discharge or in a discharged state is 0.33 nm or more and less than 0.34 nm. Examples of the graphite include natural graphite and artificial graphite. In this regard, the natural graphite is a generic term for graphite that can be taken from natural minerals, and the artificial graphite is a generic term for artificially produced graphite. Specific examples of the natural graphite include massive graphite, flake graphite, and earthy graphite. Artificial graphite is preferable from the viewpoint that a material having stable physical properties can be obtained.

The term "non-graphitic carbon" refers to a carbon material in which the average grid spacing (d₀₀₂) of the (002) plane determined by the X-ray diffraction method before charge-discharge or in the discharged state is 0.34 nm or more and 0.42 nm or less. Examples of the non-graphitic carbon include a resin-derived material, a petroleum pitch or a material derived from petroleum pitch, a petroleum coke or a material derived from petroleum coke, a plant-derived material, and an alcohol derived material.

In this regard, the "discharged state" means a state discharged so that lithium ions that can be stored and released in association with charge-discharge are sufficiently released from the carbon material as the negative active material. For example, the "discharged state" refers to a state where an open circuit voltage is 0.7 V or more in a monopolar battery in which a negative electrode containing a carbon material as a negative active material is used as a working electrode and metal Li is used as a counter electrode.

The "hardly graphitizable carbon" refers to a carbon material in which the d₀₀₂ is 0.36 nm or more and 0.42 nm or less.

The "easily graphitizable carbon" refers to a carbon material in which the d₀₀₂ is 0.34 nm or more and less than 0.36 nm.

The carbon material is usually a particle (powder). The average particle size of the carbon material is not particularly limited, and can be, for example, 1 nm or more and 100 pm or less. The average particle size of the carbon material is preferably 1 pm or more and 50 pm or less, more preferably 1.2 pm or more and 25 pm or less, and still more preferably 1.5 pm or more and 10 pm or less (for example, 5 pm or less). By setting the average particle size of the carbon material to be equal to or more than the lower limit mentioned above, the carbon material is easily manufactured or handled. By setting the average particle size of the carbon material to be equal to or less than the above upper limit, the electron conductivity of the active material layer is improved. A crusher or a classifier is used to obtain a powder with a predetermined particle size. A crushing method and a classification method can be selected from, for example, the methods exemplified for the positive electrode.

The content of the carbon material (negative active material) in the negative active material layer is preferably 60% by mass or more and 99% by mass or less, more preferably 90% by mass or more and 98% by mass or less. When the content of the carbon material is in the above range, it is possible to achieve both high energy density and productivity of the negative active material layer.

The negative active material layer may contain other negative active materials other than the carbon material as long as the effect of the present invention is not impaired. Examples of such other negative active materials include metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; a polyphosphoric acid compound; silicon carbide.

A ratio of the content of the carbon material to the total mass of the negative active material contained in the negative active material layer is preferably more than 50% by mass. The lower limit of the content of the carbon material with respect to the total mass of the negative active material is preferably 60% by mass and more preferably 70% by mass. For example, the content of the carbon material with respect to the total mass of the negative active material may be, for example, 80% by mass or more, typically 90% by mass or more. By setting the content of the carbon material to be equal to or more than the above lower limit, the output performance can be further increased. In contrast, the upper limit of the content of the carbon material with respect to the total mass of the negative active material may be, for example, 100% by mass. As described above, by substantially using only the carbon material as the negative active material, the above-described performance improvement effect can be further enhanced.

The negative active material layer contains optional components such as a conductive agent, a binder, a thickener, and a filler, if necessary. Examples of the conductive agents include carbonaceous materials other than the negative active material, metals, and conductive ceramics. The optional components such as a binder, a thickener, and a filler can be selected from the materials exemplified for the positive electrode.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

### (Separator)

The separator is interposed between the negative electrode and the positive electrode. The separator includes a substrate layer. The substrate layer includes a porous polyolefin-based resin film and contains inorganic particles. Examples of the polyolefin-based resin constituting the substrate layer include polyethylene (PE) and polypropylene (PP). Among them, a polyethylene-based resin is preferable. As the polyethylene-based resin, a homopolymer of ethylene or a copolymer of ethylene is preferably used. As the copolymer of ethylene, a copolymer obtained by polymerizing an olefin copolymerizable with ethylene and a copolymer obtained by polymerizing at least one monomer copolymerizable with ethylene, which are resins containing a repeating unit derived from ethylene at 30% by mass or more (for example, 50% by mass or more), can be used. Examples of the olefin copolymerizable with ethylene include propylene. Examples of other monomers include conjugated dienes (for example, butadiene) and acrylic acid. The substrate layer containing these polyolefin-based resins is preferable in that a shutdown function is good. As the substrate layer of the separator, a uniaxially stretched or biaxially stretched porous resin film can be suitably used. Among them, a biaxially stretched resin film can be suitably used. Here, "uniaxial stretching" refers to stretching in only one direction (for example, machine direction) in the process of stretching a resin film at a temperature equal to or more than the glass-transition temperature to orient the molecules, and "biaxial stretching" refers to stretching in two orthogonal directions (for example, the machine direction and the transverse direction). The transverse direction refers to a direction parallel to the conveying surface of the resin film and orthogonal to the machine direction. The means for forming pores in the process of fabricating a substrate layer of the separator is not particularly limited. For example, it is possible to use a dry substrate layer fabricated by adopting dry stretching in which stretching (for example, uniaxial stretching) is performed after drying, and a wet substrate layer fabricated by adopting wet stretching in which stretching (for example, biaxial stretching) is performed in a wet state (for example, a state where a resin as a raw material, inorganic particles, and a solvent are mixed). Among them, a wet-stretched substrate layer is preferable. As the substrate layer of the separator, a material obtained by combining these resins may be used, or two or more thereof may be used in mixture. For example, the structure of the substrate layer may be a single layer structure, a mixed structure (for example, a mixed structure of PP and PE), or a multilayer structure (for example, a three-layer structure of PP/PE/PP or a two-layer structure of PP/PE). Among them, a single layer structure of PE or a mixed structure of PP and PE is particularly preferable.

The substrate layer contains inorganic particles. When the substrate layer of the separator contains inorganic particles, the shape of the separator can be maintained, and the resistance to internal short-circuit can be enhanced by enhancing the effect of suppressing the temperature rise at the time of occurrence of short circuit of the energy storage device. In this embodiment, the substrate layer contains a porous polyolefin-based resin film and inorganic particles dispersed in the resin film. In a preferred aspect, the inorganic particles are held in voids of the resin film.

Examples of the inorganic particles contained in the substrate layer include oxides such as iron oxide, silicon oxide, aluminum oxide, titanium oxide, zirconium oxide, calcium oxide, strontium oxide, barium oxide, magnesium oxide and aluminosilicate; hydroxides such as magnesium hydroxide, calcium hydroxide and aluminum hydroxide; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; substances derived from mineral resources, such as talc, montmorillonite, boehmite, zeolite, apatite, kaolin, mullite, spinel, olivine, sericite, bentonite and mica, and artificial products thereof. As the inorganic compounds, simple substances or complexes of these substances may be used alone, or two or more thereof may be used in mixture. Among these inorganic compounds, silicon oxide, aluminum oxide, or aluminosilicate is preferable from the viewpoint of enhancing the resistance to internal short-circuit of the energy storage device.

The content of the inorganic particles contained in the substrate layer is preferably 1% by mass or more and 90% by mass or less, and more preferably 5% by mass or more and 85% by mass or less. When the content of the inorganic particles is within the above range, the resistance to internal short-circuit and the output performance can be enhanced. In addition, the content of the inorganic particles within the range mentioned above achieves a suitable balance between the strength (the pressure resistance in the thickness direction) and the flexibility, tear resistance, or the like.

The average particle size of the inorganic particles contained in the substrate layer is not particularly limited. The average particle size of the inorganic particles may be, for example, 0.01 pm or more and 10 pm or less. The average particle size of the inorganic particles is preferably 0.05 pm or more and 5 pm or less, more preferably 0.1 pm or more and 1 pm or less. In some aspects, the average particle size of the inorganic particles may be 0.8 pm or less, or 0.5 pm or less. The average particle size of the inorganic particles may be larger or smaller than an average pore size of the resin film, and is preferably smaller than the average pore size of the resin film.

The upper limit of the air permeability per unit thickness of the separator is 4.0 seconds/(100 cm³ µm), preferably 3.9 seconds/(100 cm³ µm), and more preferably 3.8 seconds/(100 cm³ µm). When the upper limit of the air permeability per unit thickness of the separator is equal to or less than the upper limit, the output performance can be enhanced. On the other hand, the lower limit of the air permeability per unit thickness of the separator is preferably 2.0 seconds/(100 cm³ µm), and more preferably 2.5 seconds/(100 cm³ µm) from the viewpoint of maintaining the strength of the separator. In some aspects, the air permeability per unit thickness of the separator may be, for example, 2.8 seconds/(100 cm³ µm) or more, typically 3.0 seconds/(100 cm³ µm) or more. The air permeability per unit thickness of the separator may be equal to or more than any of the above lower limits and equal to or less than any of the above upper limits. The technique disclosed herein can be preferably implemented in a mode in which the air permeability per unit thickness of the separator is 2.0 seconds/(100 cm³ µm) or more and 4.0 seconds/(100 cm³ µm) or less, and further 2.5 seconds/(100 cm³ µm) or more and 3.8 seconds/(100 cm³ µm) or less. When the air permeability per unit thickness of the separator is within the above range, both the output performance and the resistance to internal short-circuit can be achieved at a higher level. The air permeability per unit thickness of the separator can be adjusted by the porosity of the separator, the content of inorganic particles, and the like.

The average thickness of the separator is not particularly limited. The upper limit of the average thickness of the separator is, for example, 30 µm. The average thickness of the separator is, for example, preferably 25 µm or less, more preferably 20 pm or less, and still more preferably 18 pm. In some aspects, the average thickness of the separator may be 16 pm or less (for example, 15 pm or less) or 12 pm or less (for example, 10 pm or less). By setting the average thickness of the separator to be equal to or less than the above upper limit, the output performance of the energy storage device can be further improved. On the other hand, the lower limit of the average thickness of the separator is preferably 1 pm, more preferably 3 pm, and still more preferably 5 pm. In some aspects, the average thickness of the separator may be 6 pm or more, or 9 pm or more. By setting the average thickness of the separator to be equal to or more than the above lower limit, it is possible to have sufficient insulating properties and mechanical strength. The average thickness of the separator may be equal to or more than any of the above lower limits and equal to or less than any of the above upper limits. The technique disclosed herein can be preferably implemented in an aspect in which the average thickness of the separator is 3 pm or more and 20 pm or less and further 5 pm or more and 18 pm or less. When the average thickness of the separator is within the above range, both the output performance and the resistance to internal short-circuit can be achieved at a higher level.

The porosity of the separator is not particularly limited. The upper limit of the porosity of the separator is, for example, 70%. The porosity of the separator is, for example, preferably 68% or less, more preferably 65% or less, still more preferably 62% or less. In some aspects, the porosity of the separator may be 60% or less, or 58% or less. By setting the porosity to be equal to or less than the above upper limit, the strength of the separator can be maintained well. On the other hand, the lower limit of the porosity is preferably 40%, more preferably 45%, still more preferably 50%, and particularly preferably 52%. By setting the porosity to be equal to or more than the above lower limit, it is possible to further improve the reliability while maintaining good output characteristics of the energy storage device. The porosity of the separator may be equal to or more than any of the above lower limits and equal to or less than any of the above upper limits. The technique disclosed herein can be preferably carried out in a mode in which the porosity of the separator is 40% or more and 65% or less, and further 50% or more and 58% or less. When the porosity of the separator is within the above range, both the output performance and the resistance to internal short-circuit can be achieved at a higher level.

The air permeability of the entire separator is not particularly limited as long as the air permeability per unit thickness satisfies 4.0 seconds/(100 cm³ µm) or less. The air permeability of the entire separator can be, for example, 80 seconds/(100 cm³) or less. The air permeability of the entire separator is preferably 70 seconds/(100 cm³) or less, and more preferably 60 seconds/(100 cm³) or less. In some aspects, the air permeability of the entire separator may be, for example, 55 seconds/(100 cm³) or less, or 50 seconds/(100 cm³) or less (for example, 45 seconds/(100 cm³) or less). On the other hand, the air permeability of the entire separator is preferably 20 seconds/(100 cm³) or more, more preferably 25 seconds/(100 cm³) or more from the viewpoint of maintaining the strength of the separator. In some aspects, the air permeability of the entire separator may be, for example, 30 seconds/(100 cm³) or more, or 35 seconds/(100 cm³) or more. The air permeability of the entire separator may be equal to or more than any of the above lower limits and equal to or less than any of the above upper limits. The technique disclosed herein can be preferably carried out in an aspect in which the air permeability of the entire separator is 20 seconds/(100 cm³) or more and 80 seconds/(100 cm³) or less, and further 25 seconds/(100 cm³) or more and 60 seconds/(100 cm³) or less (for example, less than 60 seconds/(100 cm³), typically 55 seconds/(100 cm³) or less). When the air permeability of the entire separator is within the above range, both the output performance and the resistance to internal short-circuit can be achieved at a higher level.

The separator may have a heat resistant layer on a substrate layer including a polyolefin-based resin film. The heat resistant layer may contain, for example, heat resistant particles and a binder. The heat resistant particles contained in the heat resistant layer preferably have a mass loss of 5% or less when the temperature is raised from room temperature to 500°C in the air atmosphere of 1 atm, and more preferably have a mass loss of 5% or less when the temperature is raised from room temperature to 800°C. Examples of materials that have a mass loss equal to or less than a predetermined value include inorganic compounds. Examples of the inorganic compounds include oxides such as iron oxide, silicon oxide, aluminum oxide, titanium oxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, silicon oxide, aluminum oxide, boehmite or aluminosilicate is preferable from the viewpoint of safety of the energy storage device.

The separator may not have the heat resistant layer on the substrate layer including a polyolefin-based resin film. Such a separator is preferable in that the air permeability per unit thickness of the separator can be easily adjusted to 4.0 seconds/(100 cm³ µm) or less. The technique disclosed herein can be preferably carried out in an aspect in which the heat resistant layer is not provided on a substrate layer including a polyolefin-based resin film.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, those in which some hydrogen atoms contained in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among them, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among them, EMC is preferable.

As the nonaqueous solvent, the cyclic carbonate or the chain carbonate is preferably used, more preferably, the cyclic carbonate and the chain carbonate are used in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate: chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these, inorganic lithium salts are preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. When the content of the electrolyte salt is in the above range, it is possible to increase the ionic conductivity of the nonaqueous electrolyte solution.

The nonaqueous electrolyte solution may contain an additive, besides the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to a total mass of the nonaqueous electrolyte solution. The content of the additive falls within the above range, thereby making it possible to improve capacity retention performance or cycle performance after high-temperature storage, and to further improve reliability.

The shape of the energy storage device of the present embodiment is not particularly limited, and examples thereof include cylindrical batteries, prismatic batteries, flat batteries, coin batteries and button batteries.

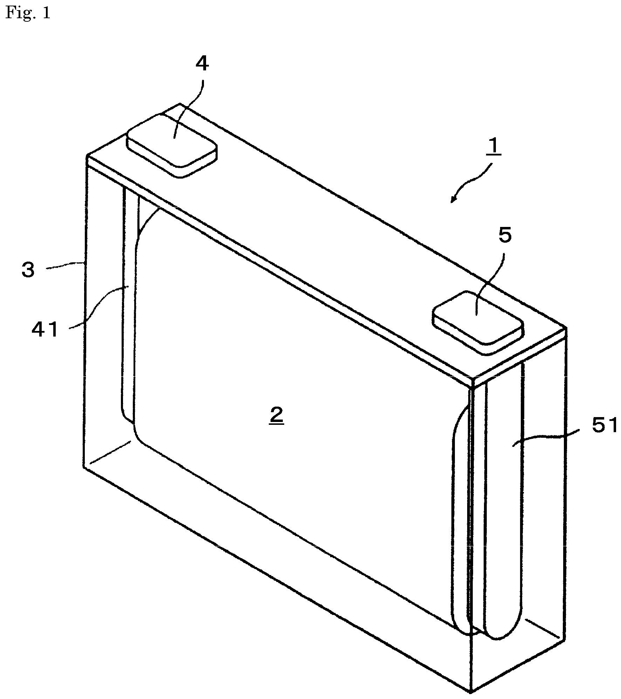

Fig. 1 illustrates an energy storage device 1 as an example of a prismatic battery. Fig. 1 is a view illustrating the inside of a case in a perspective manner. An electrode assembly 2 including a positive electrode and a negative electrode wound with a separator interposed therebetween is housed in a prismatic battery case 3. The positive electrode is electrically connected to a positive electrode terminal 4 via a positive electrode lead 41. The negative electrode is electrically connected to a negative electrode terminal 5 via a negative electrode lead 51.

### <Configuration of energy storage apparatus>

The energy storage device of the present embodiment can be mounted as an energy storage unit (battery module) configured by assembling a plurality of energy storage devices 1 on a power source for motor vehicles such as electric vehicles (EV), hybrid vehicles (HEV), and plug-in hybrid vehicles (PHEV), a power source for electronic devices such as personal computers and communication terminals, or a power source for power storage, or the like. In particular, the energy storage device can be suitably used as a power source for assisting an engine of an HEV or a PHEV. In this case, the technique of the present invention may be applied to at least one energy storage device included in the energy storage unit.

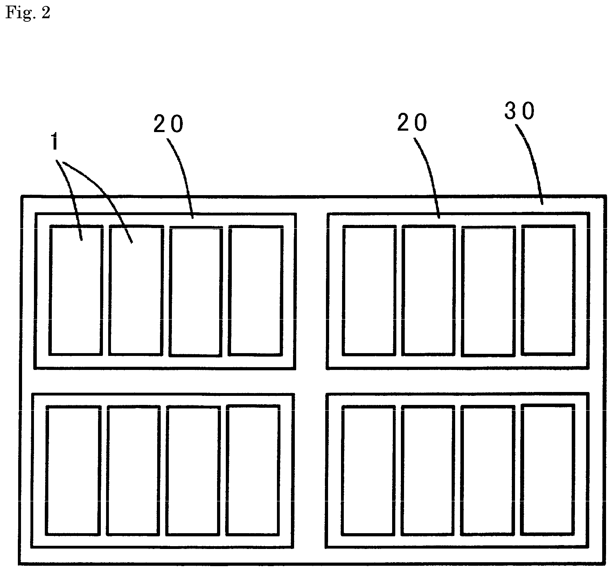

Fig. 2 shows an example of an energy storage apparatus 30 formed by assembling energy storage units 20 in each of which two or more electrically connected energy storage devices 1 are assembled. The energy storage apparatus 30 may include a busbar (not illustrated) for electrically connecting two or more energy storage devices 1, a busbar (not illustrated) for electrically connecting two or more energy storage units 20, and the like. The energy storage unit 20 or the energy storage apparatus 30 may include a state monitor (not illustrated) for monitoring the state of one or more energy storage devices 1.

### <Method for manufacturing energy storage device>

A method for manufacturing the energy storage device according to the present embodiment can be appropriately selected from known methods. The manufacturing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween.

Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, followed by sealing the inlet.

### <Other embodiments>

It is to be noted that the energy storage device according to the present invention is not to be considered limited to the embodiment mentioned above, and various changes may be made without departing from the scope of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, size, capacity, and the like of the energy storage device are arbitrary. The present invention can also be applied to capacitors such as various secondary batteries, electric double layer capacitors, or lithium ion capacitors.

### EXAMPLES

Hereinafter, the present invention will be described more specifically with reference to Examples. The present invention is not limited to the following Examples.

### [Example 1]

### (Preparation of positive electrode)

Using N-methyl-2-pyrrolidone (NMP) as a dispersion medium, LiFePO₄ as a positive active material, acetylene black as a conductive agent, and polyvinylidene fluoride (PVDF) as a binder, a positive composite paste was prepared by mixing the positive active material, the conductive agent, and the binder at a solid content mass ratio of 91 : 5 : 4. Next, the positive composite paste was applied to both surfaces of an aluminum foil as a positive electrode substrate, leaving an unapplied portion (positive active material layer non-forming portion), dried, and roll-pressed to form a positive active material layer on the positive electrode substrate. The amount of the positive composite paste applied was set to 11 mg/cm² based on the solid components. As LiFePO₄, LiFePO₄ having an average particle size of 3 pm and a specific surface area of 15 m²/g was used.

### (Preparation of negative electrode)

Using water as a dispersion medium, graphite as a negative active material, styrene butadiene rubber (SBR) as a binder, and carboxymethyl cellulose (CMC) as a thickener, a negative composite paste was prepared by mixing the negative active material, the binder, and the thickener at a solid content mass ratio of 96 : 3 : 1. The negative composite paste was applied to both surfaces of a copper foil as a negative electrode substrate, leaving an unapplied portion (negative active material layer non-forming portion), and dried to prepare a negative active material layer. Thereafter, roll pressing was performed to fabricate a negative electrode. As the graphite, graphite having an average particle size of 3 pm was used.

### (Preparation of nonaqueous electrolyte)

A nonaqueous electrolyte was prepared by dissolving LiPF₆ of 1.1 mol/dm³ in concentration in a mixed solvent obtained by mixing an ethylene carbonate (EC), a dimethyl carbonate (DMC), and an ethyl methyl carbonate (EMC) at volume ratios 30 : 35 : 35.

### (Separator)

As a separator, an inorganic particle-containing polyethylene resin film including a microporous film-like resin film made of polyethylene, containing aluminum oxide as inorganic particles, and having air permeability per unit thickness described in Table 1 was used. The air permeability per unit thickness of the separator was 4 seconds/(100 cm³ µm), the average thickness was 15 pm, and the porosity was 58%.

### (Production of energy storage device)

Next, an electrode assembly was produced by laminating and winding the positive electrode and the negative electrode with the above-mentioned separator interposed between the electrodes. The electrode assembly was housed into an aluminum prismatic case, and a positive electrode terminal and a negative electrode terminal were attached. The nonaqueous electrolyte was injected into the prismatic case, and then the inlet was sealed to obtain an energy storage device of Example 1.

### [Example 2]

An energy storage device of Example 2 was produced similarly to Example 1 except that LiFePO₄ having an average particle size of 7 pm was used.

### [Comparative Example 1]

An energy storage device of Comparative Example 1 was produced similarly to Example 1 except that in place of the inorganic particle-containing polyethylene resin film, an inorganic particle layer-stacked polyethylene resin film including a substrate layer including a microporous film-like resin film having air permeability per unit thickness shown in Table 1 and made of polyethylene and an inorganic particle layer stacked on one surface of the substrate layer was used as a separator. The inorganic particle layer contained aluminosilicate as inorganic particles and a binder.

### [Comparative Example 2]

An energy storage device of Comparative Example 2 was produced similarly to Example 1 except that Li[Ni_{0.33}Mn_{0.33}Co_{0.33}]O₂ having an α-NaFeO₂ type crystal structure was used as a positive active material in place of LiFePO₄.

### [Comparative Example 3]

An energy storage device of Comparative Example 3 was produced similarly to Comparative Example 1 except that Li[Ni_{0.33}Mn_{0.33}Co_{0.33}]O₂ having an α-NaFeO₂ type crystal structure was used as a positive active material in place of LiFePO₄.

### [Comparative Example 4]

An energy storage device of Comparative Example 4 was produced similarly to Example 1 except that the positive active material, the conductive agent, and the binder were mixed at a solid content mass ratio of 88 : 8 : 4.

### [Evaluation]

### (Output performance test at SOC 50%)

The output performance at SOC 50% was evaluated by the following procedure. Here, the SOC is a numerical value representing a state of charge of the energy storage device when a full charge state is set to 100%.

On the energy storage devices of Examples 1 and 2 and Comparative Examples 1 and 4, constant current charge was performed to a charge upper limit voltage of 3.5 V at a charge current of 1 C in an environment of 25°C, and then constant voltage charge was performed at 3.5 V for 60 minutes. After charge, a pause time of 10 minutes was provided, and then constant current discharge was performed to a discharge lower limit voltage of 2.0 V at a discharge current of 1 C in an environment of 25°C to measure the "discharge capacity at 1 C in an environment of 25°C". Next, the amount of electricity to be a half of this "discharge capacity at 1 C in an environment of 25°C" was set to SOC50%, and charge was performed from a discharged state to the SOC50% at a charge current of 1 C in an environment of 25°C. After that, the device was discharged at a discharge current of 15 C in an environment of 25°C for 10 seconds, a pause time of 10 minutes was provided, and then auxiliary charge was performed at a charge current of 15 C for 10 seconds. Similarly, the discharge current and the auxiliary charge were adjusted to 30 C and 45 C, and the output [W] was calculated from the battery voltage 10 seconds after the start of discharge at each discharge current.

For the energy storage devices of Comparative Examples 2 and 3, the output [W] was calculated in the same procedure as in Examples 1 and 2, and Comparative Examples 1 and 4 except that the charge upper limit voltage was changed to 4.2 V and the discharge lower limit voltage was changed to 2.5 V.

The output performance test results are shown in Tables 1 and 2. In this case, the test results of Examples 1 and 2 and Comparative Examples 1 and 4 are shown as relative values when the output of Comparative Example 1 is 100%. The test results of Comparative Examples 2 and 3 are shown as relative values when the output of Comparative Example 3 is 100%.

### (Internal short-circuit test)

An internal short-circuit test (nail penetration test) was performed on Examples 1 and 2, and Comparative Examples 1 to 4 by the following procedure.

On the energy storage devices of Examples 1 and 2 and Comparative Examples 1 and 4, constant current charge was performed to a charge upper limit voltage of 3.5 V at a charge current of 1 C in an environment of 25°C, and then constant voltage charge was performed at 3.5 V for 2 hours. After charge, the positive and negative electrodes were short-circuited by penetrating the energy storage device using a nail made of SU28S in an environment of 70°C. The temperature of the case of the energy storage device during the internal short-circuit test was measured using a thermocouple. For the energy storage devices of Comparative Examples 2 and 3, the internal short-circuit test was performed in the same procedure as in Examples 1 and 2, and Comparative Examples 1 and 4 except that the charge upper limit voltage was changed to 4.2 V

Table 1 shows a maximum attainable temperature of the case of the energy storage device during the internal short-circuit test in Examples 1 and 2, and Comparative Examples 1 to 4.

**[Table 1]**

| | Positive active material | Separator | | Evaluation | |
|---|---|---|---|---|---|
| | | Form | Air permeability per unit thickness [sec/(100 cm3·µm)] | Relative ratio of output performance at SOC 50% [%] | Maximum attainable temperature during internal short-circuit test [°C] |
| Example 1 | LiFePO₄ | Inorganic particle-containing polyethylene resin film | 3.7 | 107.3 | 85 |
| Comparative Example 1 | LiFePO₄ | Inorganic particle layer-stacked polyethylene resin film | 4.3 | 100.0 | 70 |
| Comparative Example 2 | Li[Ni_{0.33}Mn_{0.33}Co_{0.33}]O₂ | Inorganic particle-containing polyethylene resin film | 3.7 | 102.0 | 95 |
| Comparative Example 3 | Li[Ni_{0.33}Mn_{0.33}Co_{0.33}]O₂ | Inorganic particle layer-stacked polyethylene resin film | 4.3 | 100.0 | 92 |

**[Table 2]**

| | Positive electrode | | | Separator | | Evaluation | |
|---|---|---|---|---|---|---|---|
| | Positive active material | Average particle size of positive active material [µm] | Content of conductive agent [mass%] | Form | Air permeability per unit thickness [sec/(100 cm3·µm)] | Relative ratio of output performance at SOC 50% [%] | Maximum attainable temperature during internal short-circuit test [°C] |
| Example 1 | LiFePO₄ | 3 | 5 | Inorganic particle-containing polyethylene resin film | 3.7 | 107.3 | 85 |
| Example 2 | LiFePO₄ | 7 | 5 | Inorganic particle-containing polyethylene resin film | 3.7 | 102.0 | 70 |
| Comparative Example 4 | LiFePO₄ | 3 | 8 | Inorganic particle-containing polyethylene resin film | 3.7 | 107.3 | 397 |

As shown in Tables 1 and 2, in the energy storage device of Comparative Example 2 in which the lithium nickel cobalt manganese composite oxide, the carbon material, and the inorganic particle-containing polyethylene resin film having an air permeability per unit thickness of 4.0 seconds/(100 cm³ ·µm) or less were used in combination, and the energy storage device of Comparative Example 4 in which the polyanionic compound, the carbon material, and the inorganic particle-containing polyethylene resin film having an air permeability per unit thickness of 4.0 seconds/(100 cm³ ·µm) or less were used in combination, and the content of the conductive agent in the positive active material layer was 8% by mass, the maximum attainable temperature of the case of the energy storage device during the internal short-circuit test exceeded 90°C. In the energy storage device of Comparative Example 1, as compared with the energy storage device of Comparative Example 3, the output at SOC50% was improved only by about 2%. On the other hand, in the energy storage devices of Examples 1 and 2 in which the polyanionic compound, the carbon material and the inorganic particle-containing polyethylene resin film having an air permeability per unit thickness of 4.0 seconds/(100 cm³ ·µm) or less were used in combination, and the content of the conductive agent in the positive active material layer was 6% by mass or less, the maximum attainable temperature of the case of the energy storage device during the internal short-circuit test was lower than 90°C, and the resistance to internal short-circuit was good. In the energy storage device of Example 1, as compared with the energy storage device of Comparative Example 1, the output at SOC50% was improved by 7% or more. From these results, it was confirmed that by using a combination of the polyanionic compound, the carbon material, and an inorganic particle-containing polyolefin resin film having the specific air permeability per unit thickness, an energy storage device having excellent output performance and high resistance to internal short-circuit could be achieved as a synergistic effect by such a combination.

As a result, it was found that the energy storage device had excellent output performance and high resistance to internal short-circuit.

### INDUSTRIAL APPLICABILITY

The present invention is suitably used as an energy storage device including a nonaqueous electrolyte secondary battery used as a power source for assisting an engine of an automobile such as HEV or PHEV.

### DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. An energy storage device comprising:
a positive electrode containing a positive active material and a conductive agent;
a negative electrode containing a negative active material; and
a separator interposed between the negative electrode and the positive electrode,
wherein
a content of the conductive agent in the positive electrode is 6% by mass or less,
the positive active material contains a polyanionic compound,
the negative active material contains a carbon material,
the separator includes a substrate layer including a porous polyolefin-based resin film,
the substrate layer contains inorganic particles, and
the separator has an air permeability per unit thickness of 4.0 seconds/(100 cm³ ·µm) or less.

2. The energy storage device according to claim 1, wherein the separator has an average thickness of 18 pm or less.

3. The energy storage device according to claim 1 or 2, wherein the separator has a porosity of 58% or less.

4. The energy storage device according to any one of claims 1 to 3, wherein the polyanionic compound has an average particle size of 5 pm or less.
